(19) Europäisches Patentamt
European Patent Office
Office européen des brevets

(11) EP 1 899 708 B1

(12) **FASCICULE DE BREVET EUROPEEN**

(45) Date de publication et mention de la délivrance du brevet:
**04.05.2011 Bulletin 2011/18**

(21) Numéro de dépôt: **06778706.9**

(22) Date de dépôt: **29.06.2006**

(51) Int Cl.:
***G01N 21/27*** *(2006.01)* ***G01N 21/88*** *(2006.01)*
***G01N 21/95*** *(2006.01)*

(86) Numéro de dépôt international:
**PCT/FR2006/001513**

(87) Numéro de publication internationale:
**WO 2007/003763 (11.01.2007 Gazette 2007/02)**

(54) **PROCEDE ET DISPOSITIF D ANALYSE DE BAIES**

VERFAHREN UND VORRICHTUNG ZUR ANALYSE VON BEEREN

METHOD AND DEVICE FOR ANALYSING BERRIES

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK RS**

(30) Priorité: **30.06.2005 FR 0506742**

(43) Date de publication de la demande:
**19.03.2008 Bulletin 2008/12**

(73) Titulaire: **D.WINE**
**40800 Aire sur L'Adour (FR)**

(72) Inventeurs:
- **BERNARD, Nicolas**
**F-34570 Pignan (FR)**
- **LARCHEVEQUE, Boris**
**F-30320 Bezouce (FR)**
- **ZEBIC, Olivier, Bertrand, Daniel**
**F-34150 La Boissiere (FR)**

(74) Mandataire: **Pontet, Bernard et al**
**Pontet Allano & Associés s.e.l.a.r.l.**
**25, Rue Jean Rostand**
**Parc Club Orsay Université**
**91893 Orsay Cedex (FR)**

(56) Documents cités:
**EP-A- 0 685 814 WO-A-01/37131**

- **GUO FENG ET AL: "Study on color image processing based intelligent fruit sorting system" INTELLIGENT CONTROL AND AUTOMATION, 2004. WCICA 2004. FIFTH WORLD CONGRESS ON HANGZHOU, CHINA 15-19 JUNE 2004, PISCATAWAY, NJ, USA,IEEE, US, vol. 6, 15 juin 2004 (2004-06-15), pages 4802-4805, XP010731239 ISBN: 0-7803-8273-0**
- **GEJIMA Y ET AL: "Judgment on level of maturity for tomato quality using l*a*b* color image processing" ADVANCED INTELLIGENT MECHATRONICS, 2003. AIM 2003. PROCEEDINGS. 2003 IEEE/ASME INTERNATIONAL CONFERENCE ON JULY 20 - JULY 24, 2003, PISCATAWAY, NJ, USA,IEEE, vol. 2, 20 juillet 2003 (2003-07-20), pages 1355-1359, XP010654841 ISBN: 0-7803-7759-1**
- **ROSENBERGER C ET AL: "Calibration and quality control of cherries by artificial vision" JOURNAL OF ELECTRONIC IMAGING SPIE-INT. SOC. OPT. ENG USA, vol. 13, no. 3, juillet 2004 (2004-07), pages 539-546, XP002379942 ISSN: 1017-9909**
- **PLA F ET AL: "An integral automation of industrial fruit and vegetable sorting by machine vision" ETFA 2001. 8TH INTERNATIONAL CONFERENCE ON EMERGING TECHNOLOGIES AND FACTORY AUTOMATION. PROCEEDINGS (CAT. NO.01TH8597) IEEE PISCATAWAY, NJ, USA, vol. 2, 2001, pages 541-546 vol.2, XP002379943 ISBN: 0-7803-7241-7**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 899 708 B1

- POLDER G ET AL: "Tomato sorting using independent component analysis on spectral images" REAL-TIME IMAGING, ACADEMIC PRESS LIMITED, GB, vol. 9, no. 4, août 2003 (2003-08), pages 253-259, XP004473409 ISSN: 1077-2014
- PATENT ABSTRACTS OF JAPAN vol. 017, no. 004 (P-1464), 6 janvier 1993 (1993-01-06) & JP 04 238252 A (ISEKI & CO LTD), 26 août 1992 (1992-08-26)
- PATENT ABSTRACTS OF JAPAN vol. 017, no. 105 (P-1495), 3 mars 1993 (1993-03-03) & JP 04 294259 A (ISHII KOUGIYOU KK), 19 octobre 1992 (1992-10-19)

## Description

### Domaine technique

La présente invention concerne un procédé d'analyse de baies. Elle vise également un dispositif d'analyse de baies mettant en oeuvre ce procédé.

L'analyse de baies permet notamment d'en évaluer la maturité et l'hétérogénéité. Le domaine de l'invention est plus particulièrement celui de la viticulture et de l'analyse de la maturité du raisin.

### Etat de la technique antérieure

Il est essentiel, pour une bonne vinification, de déterminer la maturité optimale du raisin.

La maturation est un phénomène complexe, dans lequel interviennent biosynthèses, transports, stockages et transformations de différents éléments comme des sucres et des acides organiques, des phénols ou des précurseurs d'arômes. De nombreuses techniques permettent aujourd'hui d'évaluer la maturité du raisin.

Citons par exemple des techniques comme la mesure de la concentration en sucres ou en acides de baies de raisin par dosage chimique. Le rapport sucres sur acides, appelé indice de maturation, ne permet pas de conclure de manière affirmative sur la maturité de baies de raisin, il faut aussi s'intéresser aux valeurs des deux composantes de ce rapport, et considérer ce rapport dans une échelle spécifique à chaque cépage.

On peut aussi citer des techniques comme la dégustation de baies, qui comporte un caractère subjectif et limité en échantillonnage, ou l'étude du rapport entre la concentration en acide tartrique et en acide malique.

Toutes ces techniques ne permettent pas d'appréhender de manière complète la maturité du raisin, ni de suivre la maturation dans sa complexité.

Le document EP0685814 (figures. 1-4, 11, 14) divulgue un système de reconnaissance de produits 131, par exemple de baies comportant une source de lumière 110 (une ampoule fluorescente), une caméra 120, un système de traitement d'images comprenant un ordinateur 140, et un dispositif de saisie de trame 142. Le traitement des images comporte une segmentation d'image 130 de l'objet 131 dans les différentes régions selon laquelle l'objet est séparé de l'image de fond (étape 220), une identification des caractéristiques des régions de l'objet (étape 230), et une reconnaissance des objets par comparaison avec une information de référence 270 stockée (étape 260) selon les caractéristiques de couleur, forme et texture par exemple. Au moyen d'un filtre 420 les éblouissements sont évités et dans une étape de normalisation 250 la dépendance des calculs en fonction de la taille réelle est annulée. Selon un mode de réalisation les histogrammes et les moyennes des caractéristiques (par exemple la courbure de la ligne de démarcation) sont dérivés.

Le but de la présente invention est de proposer un procédé et un dispositif d'analyse de baies, notamment de baies de raisin, non pas à partir de dosages chimiques, mais à partir de caractéristiques visuelles de baies. L'avantage du suivi d'une caractéristique visuelle telle que le volume des baies est qu'il permet de tracer directement des cinétiques de volume de baies, et qu'il permet ainsi de prévoir ou constater par exemple un flétrissement des baies.

### Exposé de l'invention

Cet objectif est atteint avec un procédé d'analyse de baies, comprenant :

- une disposition de baies sur un plateau d'analyse,
- une acquisition d'une image des baies disposées, ladite image des baies étant composée de pixels d'au moins une composante de couleur élémentaire,
- une identification de contours des baies, et
- une détermination de caractéristiques géométriques et/ou colorimétriques des baies,

caractérisé en ce qu'il comprend en outre une réitération du procédé selon l'invention sur un même type de baies, et en ce qu'il comprend en outre un suivi temporel d'au moins une des caractéristiques géométriques et/ou colorimétriques déterminées sur les baies du même type.

Le procédé selon l'invention peut comprendre en outre un éclairage des baies selon des conditions d'éclairement prédéterminées.

Le procédé selon l'invention peut comprendre en outre un étalonnage géométrique de l'image des baies, ou une correction des couleurs de l'image des baies.

L'identification de contours des baies peut comprendre :

- une transformation de l'image des baies en une image seuillée, sur laquelle on distingue des blocs de baies,
- une suppression d'impuretés de l'image seuillée, et

- une segmentation des blocs de baies en baies aux contours définis.

La transformation en image seuillée peut comprendre un seuillage de l'image des baies selon un seuil de valeur d'une composante de couleur élémentaire.

La suppression d'impuretés peut comprendre une succession d'érosions et de dilatations des blocs de baies ou un algorithme de bouchage de trous par propagation.

La segmentation des blocs de baies peut comprendre :

- une transformation de l'image seuillée en une image de niveaux de gris,
- un seuillage par logique floue de l'image de niveaux de gris,
- une utilisation d'un opérateur d'érosion jusqu'à obtenir un centre de gravité par baie, et
- une expansion autour des centres de gravité, jusqu'à obtention des contours des baies.

Le procédé selon l'invention peut comprendre en outre une détermination du nombre de baies sur l'image de baies.

La détermination de caractéristiques peut comprendre une détermination d'un volume par baie, ainsi que d'une moyenne et d'un facteur d'hétérogénéité du volume de toutes les baies. La détermination de caractéristiques peut aussi comprendre une détermination d'une superficie par baie, ainsi que d'une moyenne et d'un facteur d'hétérogénéité de la superficie de toutes les baies. La détermination de caractéristiques peut aussi comprendre une détermination d'un rapport d'une superficie sur un volume par baie, ainsi que d'une moyenne et d'un facteur d'hétérogénéité du rapport d'une superficie sur un volume de toutes les baies. Cette détermination de caractéristiques peut aussi comprendre, pour chaque baie et au moins une composante de couleur élémentaire, un calcul d'une moyenne, sur tous les pixels de l'image des baies à l'intérieur du contour d'une baie considérée, des valeurs d'une composante de couleur élémentaire considérée. Dans le cas où la composante de couleur élémentaire est située dans l'infrarouge, le procédé selon l'invention peut comprendre en outre une détermination, par spectrophotométrie infrarouge et chimiométrie, d'au moins une concentration caractéristique par baie, ainsi qu'une détermination d'une moyenne et d'un facteur d'hétérogénéité d'au moins d'une des concentrations caractéristiques de toutes les baies. Les concentrations caractéristiques peuvent par exemple consister en une quantité de sucre, une acidité, une concentration en azote, une concentration en anthocyanes, ou une concentration en polyphénols. De plus, cette détermination de caractéristiques peut aussi comprendre, pour chaque baie et au moins une composante de couleur d'intérêt, un calcul d'une moyenne, sur tous les pixels de l'image des baies à l'intérieur du contour d'une baie considérée, des valeurs d'une composante de couleur d'intérêt considérée, à partir des moyennes de valeurs d'une composante de couleur élémentaire. Enfin, cette détermination de caractéristiques peut aussi comprendre un calcul d'une moyenne et d'un facteur d'hétérogénéité des moyennes des valeurs d'une composante de couleur élémentaire ou d'intérêt de toutes les baies. On peut entendre par facteur d'hétérogénéité un coefficient de dispersion calculé par un rapport d'un écart type avec une moyenne.

Dans un premier mode de réalisation appliqué à des baies de raisin blanc, les composantes de couleurs d'intérêts peuvent être le jaune et le vert.

Dans un second mode de réalisation appliqué à des baies de raisin rouge, les composantes de couleurs d'intérêts peuvent être le rouge et le noir.

Le procédé selon l'invention peut comprendre en outre un accès à une base de données comprenant notamment d'autres résultats d'analyses de baies obtenus à l'aide d'un procédé quelconque. Ces résultats d'analyses peuvent donc aussi bien être des caractéristiques géométriques et/ou colorimétriques obtenues à l'aide d'un procédé selon l'invention, que d'autres types de données comme des concentrations par baie, tels que l'acidité ainsi que le dosage de sucres, qui, couplé au volume donne le taux de chargement en sucres.

Le procédé selon l'invention peut comprendre en outre une visualisation des caractéristiques géométriques et/ou colorimétriques déterminées et/ou d'autres données. Il peut aussi comprendre en outre une visualisation d'une évolution temporelle de caractéristiques géométriques et/ou colorimétriques déterminées selon l'invention et/ou d'autres données. Parmi les exemples d'autres données, on peut citer des données issues d'une base de données ou d'une autre source quelconque.

Il peut aussi comprendre en outre un export, dans un fichier d'un tableur, des caractéristiques géométriques et/ou colorimétriques, et/ou d'autres résultats d'analyses de baies obtenus à l'aide d'un procédé quelconque. Dans un mode préférentiel de réalisation, le fichier est un fichier Excel.

Le procédé selon l'invention peut comprendre en outre une réitération du procédé selon l'invention sur le même type de baies. Le procédé salon l'invention peut alors comprendre en outre une analyse temporelle des caractéristiques géométriques et colorimétriques des baies.

Selon un autre aspect de l'invention, il est proposé un dispositif d'analyse de baies mettant en oeuvre le procédé précédent, comprenant :

- un plateau d'analyse,
- des moyens pour acquérir une image de baies disposées sur le plateau d'analyse, ladite image étant composée de pixels d'au moins une composante de couleur élémentaire, et
- des moyens pour déterminer des caractéristiques géométriques et/ou colorimétriques des baies

caractérisé en ce qu'il comprend en outre des moyens pour réaliser un suivi temporel d'au moins une des caractéristiques déterminées sur des baies d'un même type.

Le dispositif selon l'invention peut comprendre en outre des moyens pour éclairer des baies disposées sur le plateau d'analyse. Il peut alors comprendre en outre une surface de verre dépolie située entre les moyens pour éclairer et le plateau d'analyse, et située en amont des moyens pour acquérir une image de baies. De cette manière, l'éclairage du plateau d'analyse est plus homogène, et les moyens pour acquérir une image ne voient pas à travers le verre dépoli.

Le plateau d'analyse peut être d'une couleur se démarquant de la couleur des baies.

Le plateau d'analyse peut comprendre des renfoncements espacés.

Les moyens pour acquérir une image de baies peuvent comprendre un appareil d'imagerie numérique possédant des pixels de trois composantes de couleurs élémentaires: rouge, vert, et bleu. On aurait aussi pu imaginer une caméra multispectrale réalisant une acquisition d'une image de baies dans un domaine du visible et/ou un domaine de l'infrarouge, pour permettre en plus l'acquisition directe d'une concentration caractéristique telle que une quantité de sucre, une acidité, une concentration en azote, une concentration en anthocyanes, ou une concentration en polyphénols.

Le dispositif selon l'invention peut comprendre en outre des moyens pour étalonner géométriquement l'image de baies. Ces moyens pour étalonner géométriquement l'image de baies peuvent comprendre un objet de référence aux dimensions connues.

Le dispositif selon l'invention peut comprendre en outre des moyens pour corriger les couleurs de l'image de baies. Ces moyens pour corriger les couleurs de l'image de baies peuvent comprendre une mire de couleur. Dans un premier mode de réalisation, la mire est une mire bicolore circulaire noir et blanc. Dans un deuxième mode de réalisation, la mire est une mire couleur de type "Macbeth".

Les moyens pour déterminer des caractéristiques géométriques et/ou colorimétriques peuvent comprendre des moyens de traitement d'image, comme un ordinateur et un logiciel de traitement d'image.

Le dispositif selon l'invention peut comprendre en outre des moyens pour accéder à une base de données comprenant notamment d'autres résultats d'analyses de baies obtenus à l'aide d'un dispositif quelconque. Ces résultats d'analyses peuvent donc aussi bien être des caractéristiques géométriques et/ou colorimétriques obtenues à l'aide d'un dispositif selon l'invention, que d'autres types de données comme des dosages de sucres.

Le dispositif selon l'invention peut comprendre en outre des moyens pour visualiser les caractéristiques géométriques et/ou colorimétriques déterminées et/ou d'autres données. Il peut aussi comprendre en outre des moyens pour visualiser une évolution temporelle de caractéristiques géométriques et/ou colorimétriques déterminées selon l'invention et/ou d'autres données.

Le dispositif selon l'invention peut comprendre en outre des moyens pour exporter, dans un fichier d'un tableur, des caractéristiques géométriques et/ou colorimétriques, et/ou d'autres résultats d'analyses de baies obtenus à l'aide d'un dispositif quelconque. Dans un mode préférentiel de réalisation, le fichier est un fichier Excel.

## Description des figures et modes de réalisation

D'autres avantages et caractéristiques de l'invention apparaîtront à l'examen de la description détaillée de mises en oeuvre nullement limitatives, et des dessins annexés sur lesquels :

- les figures 1A et 1B illustrent un dispositif d'analyse de baies selon l'invention,
- la figure 2 est un organigramme d'un mode de mise en oeuvre du procédé selon l'invention,
- la figure 3A illustre une image de baies disposées sur un plateau d'analyse de manière désordonnée, et acquise à l'aide d'un dispositif selon l'invention,
- la figure 3B illustre une image de baies disposées sur un plateau d'analyse de manière ordonnée, et acquise à l'aide d'un dispositif selon l'invention,
- les figures 4A à 4H illustrent une identification de contours de baies sur une image selon l'invention :
    - la figure 4A illustre une méthode de calcul d'un seuil de valeur d'une composante de couleur,
    - la figure 4B illustre une transformation d'une image de baies en une image seuillée,
    - la figure 4C illustre une suppression de petites impuretés d'une image seuillée,
    - la figure 4D illustre une suppression d'impuretés type reflets lumineux d'une image seuillée,
    - la figure 4E illustre une transformation d'une image seuillée en une image de niveaux de gris,
    - la figure 4F illustre un seuillage par logique flou d'une image de niveaux de gris,

- la figure 4G illustre une image baie par baie,
- la figure 4H illustre une image numérique d'une baie au contour défini,

- la figure 5 illustre une visualisation de caractéristiques de baies déterminées selon l'invention, et
- la figure 6 illustre une visualisation de l'évolution d'une caractéristique de baies déterminée selon l'invention, en fonction du temps.

On va tout d'abord décrire, en référence aux figures 1A et 1B, un exemple de dispositif 1 d'analyse de baies selon l'invention. La figure 1A est une vue générale et la figure 1B est une vue de coupe de profil du dispositif 1. Un tel dispositif comprend un plateau 2 d'analyse de baies, sur lequel on peut disposer des baies. Il comprend aussi sous sa partie supérieure 3 des moyens 4 pour éclairer des baies disposées sur le plateau comprenant un tube néon circulaire, et des moyens 5 pour acquérir une image numérique, sensiblement focalisés sur le plateau d'analyse. Il comprend de plus un panel PC 6 comprenant une unité centrale d'un ordinateur, un logiciel de traitement d'images qui permet d'extraire d'une image numérique de baies des caractéristiques géométriques et/ou colorimétriques desdites baies, des moyens de connexion à une base de données, et un écran à dalle tactile 8 de visualisation. L'écran de visualisation permet notamment de visualiser les caractéristiques géométriques et/ou colorimétriques extraites, ou d'autres données, comme des évolutions temporelles de caractéristiques géométriques et/ou colorimétriques déterminées selon l'invention, ou des données issues d'une base de données ou d'une autre source quelconque. Il permet aussi une interaction avec un utilisateur.

Le dispositif 1 comprend en outre un dépoli 7 entre les moyens 4 pour éclairer et le plateau 2, ceci afin d'homogénéiser la lumière au niveau du plateau.

Le plateau 2 d'analyse peut avoir à sa surface des renfoncements espacés.

Dans un mode préférentiel de réalisation, le plateau 2 d'analyse est d'une couleur se démarquant de la couleur des baies, par exemple bleu dans le cas de baies de raisin.

Un tel dispositif peut aussi comprendre des moyens 10 pour corriger les couleurs de l'image numérique ou des moyens 11 pour étalonner géométriquement l'image. Pour corriger les couleurs, on peut par exemple imaginer une mire bicolore circulaire noir et blanc située sur le plateau 2. Cette mire, spécialement conçue pour étalonner les systèmes restituant la couleur, est constituée d'un disque blanc sur un disque noir deux fois plus grand, aux proportions de couleurs élémentaires rouge, vert, et bleu connues. On aurait aussi pu imaginer une mire de type "Macbeth" située sur le plateau 2. Cette mire, aussi conçue pour étalonner les systèmes restituant la couleur, est constituée d'un pluralité de cases de différentes couleurs, aux proportions de couleurs élémentaires rouge, vert, et bleu connues. Pour étalonner géométriquement l'image, on peut utiliser un objet de référence aux dimensions connues, telle qu'une mire graduée. Il est cependant astucieux d'utiliser comme objet de référence aux dimensions connues le plateau de positionnement 2. L'étalonnage géométrique est obligatoire pour connaître la taille d'un pixel d'une image en millimètres, utile lors d'un calcul d'un volume d'une baie. Les moyens 10 pour corriger les couleurs et les moyens 11 pour étalonner géométriquement l'image ne sont cependant pas nécessaires dans le cas où les moyens 4 pour éclairer, ainsi que la position relative des moyens 4 pour éclairer par rapport au plateau 2, ne changent pas, car dans ce cas là le dispositif peut être étalonné une unique fois lors de sa fabrication.

Nous allons maintenant décrire, en référence à la figure 2, un organigramme d'un mode de mise en oeuvre du procédé d'analyse de baies selon l'invention. On commence par une disposition 12 des baies sur un plateau d'analyse. On fait ensuite une acquisition 13 d'une image des baies sur le plateau, succédée par une identification 14 de contours des baies présentes sur l'image. L'image est composée de pixels d'une pluralité de composantes de couleurs élémentaires, classiquement rouge, vert et bleu. Un exemple d'identification de contours est détaillé sur les figures suivantes. Cette identification de contours permet une détermination 15 de caractéristiques géométriques et/ou colorimétriques, telles que :

- des rayons caractéristiques ou un périmètre pour chaque baie,
- un volume pour chaque baie,
- une moyenne et un facteur d'hétérogénéité du volume de toutes les baies,
- une superficie pour chaque baie,
- une moyenne et un facteur d'hétérogénéité de la superficie de toutes les baies,
- un rapport superficie sur volume pour chaque baie,
- une moyenne et un facteur d'hétérogénéité du rapport superficie sur volume de toutes les baies,
- une moyenne, sur tous les pixels à l'intérieur du contour d'une baie considérée, des valeurs d'une composante de couleur élémentaire considérée, et
- une moyenne, sur tous les pixels à l'intérieur du contour d'une baie considérée, des valeurs d'une composante de couleur d'intérêt considérée.
- une moyenne et un facteur d'hétérogénéité des moyennes des valeurs d'une composante de couleur élémentaire

ou d'intérêt de toutes les baies.

On peut entendre par facteur d'hétérogénéité un coefficient de dispersion calculé par un rapport d'un écart type avec une moyenne.

Au cours de la détermination du contour de chaque baie, on labellise chaque baie, et on détermine ainsi de plus le nombre de baies.

Après avoir déterminé des caractéristiques géométriques et/ou colorimétriques des baies, on peut procéder à la visualisation 16 de ces caractéristiques. Cette visualisation peut comprendre l'affichage de statistiques, sur les baies analysées, des caractéristiques déterminées. Ces statistiques peuvent comprendre des courbes, des histogrammes, ou des grandeurs telles que des moyennes ou des facteurs d'hétérogénéité.

Un accès 17 à une base de données permet de plus de sauvegarder les caractéristiques déterminées, et de comparer ces caractéristiques avec des données issues d'autres analyses :

- réalisées selon un procédé selon l'invention ou selon un procédé quelconque tel que par exemple un dosage chimique de sucres,
- réalisées le même jour ou non,
- réalisées sur des baies provenant d'une même parcelle ou non,
- réalisées sur des baies d'un même cépage, ou non,
- réalisées pour le compte d'un même client ou non,
- réalisées sur des baies provenant d'une parcelle appartenant à la même structure ou non.

Un export 9 dans un fichier d'un tableur comme Excel permet de sauvegarder des caractéristiques déterminées selon l'invention et/ou des résultats d'analyses de baies obtenues par des procédés quelconques, et permet ainsi de travailler sur ces données dans un système extérieur.

Une visualisation 18 permet d'étudier, de corréler, de comparer ou faire le suivi dans le temps de toutes ces données et caractéristiques.

Le procédé selon l'invention peut comprendre en outre un étalonnage géométrique de l'image ou une correction des couleurs de l'image.

La figure 3A illustre une image de baies 20 disposées sur un plateau 19 d'analyse de manière désordonnée, et acquise à l'aide d'un dispositif selon l'invention. L'image est acquise sous format numérique, et possède des pixels de trois composantes de couleurs élémentaires: rouge, vert et bleu.

La figure 3B illustre une image de baies 22 disposées sur un plateau 21 d'analyse de manière ordonnée, et acquise à l'aide d'un dispositif selon l'invention. Ce plateau 21 d'analyse possède à sa surface des renfoncements espacés, ce qui permet de disposer facilement les baies de raisin de manière ordonnée. L'image est acquise sous format numérique, et possède des pixels de trois composantes de couleurs élémentaires : rouge, vert et bleu. Les baies sont disposées de manière régulière horizontalement et verticalement, formant ainsi une sorte de quadrillage de baies.

Nous allons maintenant décrire, en référence aux figures 4A, 4B, 4C, 4D, 4E, 4F, 4G et 4H, une identification de contours de baies sur une image selon l'invention, appliquée au cas particulier de baies de raisin blanc et d'une image numérique composée de pixels de trois composantes de couleurs élémentaires : rouge, vert et bleu.

Après avoir acquis une image numérique telle que celles illustrées sur les figures 3A ou 3B, on commence par seuiller l'image numérique. Le seuillage est effectué selon un certain seuil de valeur d'une composante de couleur élémentaire. Dans le cas particulier de baies de raisin, il est astucieux d'utiliser un plateau d'analyse bleu se démarquant des baies. Dans ce cas, le seuillage est effectué selon un certain seuil de valeur de la composante bleue.

La figure 4A illustre une explication graphique d'une méthode de calcul d'un tel seuil de valeur de la composante bleue. On trace la courbe 23 du nombre de pixels en fonction de la valeur de la composante bleue desdits pixels, ainsi que la droite 24 passant par le maximum de la courbe 23 et par l'origine. Le seuil 25 correspond à la valeur pour laquelle la distance verticale entre la droite 24 et la courbe 23 est la plus importante.

Une fois le seuil déterminé, on seuille l'image numérique: si la composante bleue d'un pixel de l'image numérique est supérieure ou égale au seuil, le pixel correspondant dans l'image seuillée est mis à 0, sinon il est mis à 1. On obtient alors une image seuillée sur laquelle apparaissent plusieurs baies en blocs ou séparées. La figure 4B illustre une image seuillée, sur laquelle on distingue un bloc 26 de trois baies. Cette image seuillée est un fragment d'une image comprenant de nombreuses baies isolées ou en blocs. On distingue de plus de petites impuretés 28 en dehors du bloc 26, des impuretés 29A, 29B et 29C à l'intérieur du bloc 26 dues à des reflets de l'éclairage sur les baies, et une grosse impureté 27 provenant d'un pédoncule d'une baie. Pour délimiter distinctement et précisément le contour des baies sur l'image seuillée, il reste à éliminer les impuretés de l'image seuillée, et séparer les blocs de baies.

Pour éliminer les petites impuretés et les pédoncules, on utilise un opérateur d'ouverture en morphologie mathématique, comprenant un ensemble d'une érosion suivie d'une dilatation, réitéré plusieurs fois. La figure 4C illustre le résultat d'un tel opérateur appliqué sur l'image seuillée de la figure 4B. On y distingue toujours un bloc de baies 30,

ainsi que des impuretés 31A, 31B et 31C à l'intérieur du bloc 30 dues à des reflets de l'éclairage sur les baies.

Pour éliminer les impuretés à l'intérieur du bloc de baies, on utilise un algorithme de bouchage de trous par propagation. La figure 4D illustre le résultat d'un tel algorithme appliqué sur l'image seuillée de la figure 4C. On y distingue toujours un bloc 32 de trois baies qu'il reste à séparer.

Pour séparer les baies, on commence par transformer l'image seuillée de la figure 4D en une image de niveaux de gris pour laquelle chaque pixel a pour valeur le nombre de pixels de l'image seuillée n'appartenant pas au plateau d'analyse sur un cercle centré sur le pixel correspondant de l'image seuillé. Typiquement, ce cercle a un rayon paramétrable dont la valeur par défaut est d'environ un centième de la taille du bloc de baie. La figure 4E illustre une telle image en niveaux de gris obtenue à partir de l'image seuillée de la figure 4D. On y distingue un bloc de trois baies en niveaux de gris comprenant trois lobes 33A, 33B et 33C. On effectue ensuite un seuillage par logique floue de l'image en niveaux de gris. La figure 4F illustre le résultat d'un tel seuillage, obtenu à partir de l'image en niveaux de gris de la figure 4E. On distingue sur la figure 4F trois lobes 34, 35 et 36, soit un lobe par baie. On utilise ensuite sur l'image obtenue un opérateur d'érosion en morphologie mathématique pour calculer une érodée ultime, et ainsi obtenir le centre de gravité de chaque baie, ce qui permet de labelliser chaque baie et de calculer une boite englobante pour chaque baie. Finalement, par extension autour des centres de gravité de chaque baie et par effet calque avec l'image seuillée de départ illustrée sur la figure 4B, on obtient une image baie par baie, sur laquelle on distingue le contour de chaque baie. La figure 4G illustre une image baie par baie obtenue à partir de l'image illustrée sur la figure 4F. On distingue sur la figure 4G trois formes distinctes de baies 37A, 37B et 37C.

On superpose ensuite le contour de chaque baie précédemment déterminé à l'image numérique dont on a fait l'acquisition. On obtient alors une image numérique en couleur sur laquelle le contour de chaque baie est déterminé. La figure 4H est un fragment d'une telle image numérique couleur, sur laquelle on distingue notamment une baie 38, son contour 39, et son pédoncule 40 à l'extérieur de son contour, parmi un groupe de trois baies.

Notons que dans le cas où les baies sont disposées de manière ordonnée sur un plateau d'analyse, cela évite de devoir séparer des blocs de baies en baies bien distinctes.

On peut appliquer une identification de contours de baies selon l'invention sur une image comprenant des centaines de baies en blocs ou isolées. On peut ensuite déterminer des caractéristiques géométriques comme :

- des rayons caractéristiques ou un périmètre pour chaque baie,
- un volume V pour chaque baie. On peut par exemple utiliser la formule :

$$V = \frac{4}{3}\pi R r^2$$

avec r la plus petite distance entre le centre de gravité et le contour de la baie, et R la plus grande distance entre le centre de gravité et le contour de la baie,
- une moyenne et un facteur d'hétérogénéité du volume de toutes les baies,
- une superficie S pour chaque baie. On entend par superficie la surface de la baie dans l'espace, et non pas la surface à l'intérieur du contour de la baie et contenue dans le plan de l'image numérique. On peut par exemple utiliser la formule :

$$S = \pi\left(2r^2 + \frac{R^2}{\sqrt{1-\frac{r^2}{R^2}}}\ln\left(\frac{1+\sqrt{1-\frac{r^2}{R^2}}}{1-\sqrt{1-\frac{r^2}{R^2}}}\right)\right)$$

avec r la plus petite distance entre le centre de gravité et le contour de la baie, et R la plus grande distance entre le centre de gravité et le contour de la baie,
- une moyenne et un facteur d'hétérogénéité de la superficie de toutes les baies,
- un rapport superficie sur volume pour chaque baie, et
- une moyenne et un facteur d'hétérogénéité du rapport superficie sur volume de toutes les baies.

Puisqu'on peut déterminer ces caractéristiques pour toutes les baies de l'image, on peut bien évidemment déterminer

le nombre de baies. Notons de plus que l'acquisition d'une image en noir et blanc est suffisante pour la détermination des caractéristiques géométriques précédemment listées.
Dans le cas où on a effectué une acquisition d'une image numérique composée de pixels de trois composantes de couleurs élémentaires rouge, vert et bleu, on peut aussi déterminer des caractéristiques colorimétriques comme :

- une moyenne, sur tous les pixels à l'intérieur du contour d'une baie considérée, des valeurs de la composante élémentaire rouge,
- une moyenne, sur tous les pixels à l'intérieur du contour d'une baie considérée, des valeurs de la composante élémentaire verte,
- une moyenne, sur tous les pixels à l'intérieur du contour d'une baie considérée, des valeurs de la composante élémentaire bleue,
- une moyenne, sur tous les pixels à l'intérieur du contour d'une baie considérée, des valeurs d'une composante de couleur d'intérêt, et
- une moyenne et un facteur d'hétérogénéité des moyennes des valeurs d'une composante de couleur élémentaire ou d'intérêt de toutes les baies.

Dans le cas d'une analyse de baies de raisin blanc, le jaune et le vert sont des couleurs d'intérêts particulièrement pertinentes. En effet, au fur et à mesure de sa maturation, une baie de raisin blanc à tendance à dorer, passant du vert au jaune. L'analyse de ces deux couleurs peut alors donner une information sur la maturité des baies de raisin blanc.
Dans le cas d'une analyse de baies de raisin rouge, le rouge et le noir sont des couleurs d'intérêts particulièrement pertinentes. En effet, au fur et à mesure de sa maturation, une baie de raisin rouge à tendance à foncer. L'analyse de ces deux couleurs peut alors donner une information sur la maturité des baies de raisin rouge.
Dans le cas où on a effectué une acquisition d'une image de baies dont une composante de couleur élémentaire est située dans l'infrarouge, on peut aussi déterminer une caractéristique colorimétrique comme une moyenne, sur tous les pixels à l'intérieur du contour d'une baie considérée, des valeurs de la composante de couleur dans l'infrarouge. On peut alors en déduire, par spectrophotométrie infrarouge et chimiométrie, des concentrations caractéristiques par baie, ainsi qu'une moyenne et un facteur d'hétérogénéité d'au moins une concentration caractéristique de toutes les baies. Les concentrations caractéristiques peuvent par exemple consister en une quantité de sucre, une acidité, une concentration en azote, une concentration en anthocyanes, ou une concentration en polyphénols.
La figure 5 illustre une visualisation de caractéristiques de baies déterminées selon l'invention, à partir d'une image numérique composée de pixels de trois composantes de couleurs élémentaires rouge, vert et bleu, de baies de raisin blanc. Y est représenté le nombre de baies, en pourcent, en fonction de la moyenne par baie des valeurs de la composante de couleur élémentaire rouge (courbe en grand pointillé 42), vert (courbe en pointillé 43), et bleue (courbe pleine 41). On aurait pu de même tracer le nombre de baies, en pourcent, en fonction de n'importe laquelle des caractéristiques géométriques et/ou colorimétriques listées au paragraphe précédent. Un accès à une base de données permet de sauvegarder des caractéristiques déterminées. Cet accès permet par exemple de suivre l'évolution temporelle de ces caractéristiques en réalisant le procédé selon l'invention plusieurs fois de manière espacée dans le temps. Cet accès permet aussi de corréler ces caractéristiques avec des données issues d'autres analyses comme un dosage de sucres.
La figure 6 illustre une visualisation d'une caractéristique de baies, le volume moyen des baies, déterminée selon l'invention, en fonction du temps. On y distingue 4 courbes 44, 45, 46, et 47, représentant le volume moyen des baies de quatre parcelles différentes de raisin blanc, entre un sept septembre et un trente septembre. Comme dans le cas de la figure 5, on aurait pu tracer l'évolution temporelle de n'importe quelle autre caractéristique géométrique ou colorimétrique déterminée. Une des données les plus pertinentes est notamment le rapport entre la superficie et le volume des baies.
Bien sûr, l'invention n'est pas limitée aux exemples qui viennent d'être décrits et de nombreux aménagements peuvent être apportés à ces exemples sans sortir du cadre de l'invention. En particulier, on peut imaginer de nombreuses variations quant à la manière d'identifier les contours des baies.

## Revendications

**1.** Procédé d'analyse de baies (20), comprenant :

- une disposition de baies sur un plateau (2) d'analyse,
- une acquisition d'une image des baies (20) disposées, ladite image des baies (20) étant composée de pixels d'au moins une composante de couleur élémentaire,
- une identification de contours des baies (20), et

- une détermination de caractéristiques géométriques et/ou colorimétriques des baies (20),

**caractérisé en ce qu'**il comprend en outre une réitération du procédé selon l'invention sur un même type de baies (20), et **en ce qu'**il comprend en outre un suivi temporel d'au moins une des caractéristiques géométriques et/ou colorimétriques déterminées sur les baies (20) du même type.

**2.** Procédé selon la revendication 1, **caractérisé en ce qu'**il comprend en outre une sauvegarde d'au moins une des caractéristiques déterminées.

**3.** Procédé selon la revendication 1 ou 2, **caractérisé en ce que** l'on réalise le procédé selon l'invention sur des baies provenant d'une même parcelle.

**4.** Procédé selon l'une quelconque des revendications précédentes, **caractérisé en ce qu'**il comprend en outre une visualisation d'une évolution temporelle de caractéristiques déterminées.

**5.** Procédé selon l'une quelconque des revendications précédentes, **caractérisé en ce qu'**il comprend en outre un accès à une base de données comprenant au moins un résultat d'une autre analyse de baies obtenu à l'aide d'un procédé quelconque.

**6.** Procédé selon la revendication 5, **caractérisé en ce que** le résultat d'analyse consiste en une concentration.

**7.** Procédé selon la revendication 6, **caractérisé en ce que** la détermination de caractéristiques comprend une détermination d'un volume moyen des baies disposées, et **en ce qu'**il comprend l'obtention d'un chargement en sucre par couplage du volume déterminé et d'une concentration de sucres.

**8.** Procédé selon l'une quelconque des revendications précédentes, **caractérisé en ce qu'**il comprend en outre une visualisation de caractéristiques déterminées.

**9.** Procédé selon l'une quelconque des revendications précédentes, **caractérisé en ce qu'**il comprend en outre une détermination du nombre de baies sur l'image de baies.

**10.** Procédé selon l'une quelconque des revendications précédentes, **caractérisé en ce que** la détermination de caractéristiques comprend une détermination d'un volume par baie.

**11.** Procédé selon l'une quelconque des revendications précédentes, **caractérisé en ce que** la détermination de caractéristiques comprend une détermination d'une superficie par baie.

**12.** Procédé selon l'une quelconque des revendications précédentes, **caractérisé en ce que** la détermination de caractéristiques comprend une détermination d'un rapport d'une superficie sur un volume par baie.

**13.** Procédé selon l'une quelconque des revendications précédentes, **caractérisé en ce que** la détermination de caractéristiques comprend, pour chaque baie et au moins une des composantes de couleur élémentaire ou une composante de couleur d'intérêt, un calcul d'une moyenne, sur tous les pixels de l'image des baies à l'intérieur du contour de la baie, des valeurs de la composante de couleur considérée.

**14.** Procédé selon la revendication 13, **caractérisé en ce qu'**il est appliqué à des baies de raisin blanc, et **en ce que** la composante de couleur considérée est le jaune ou le vert, ou **en ce qu'**il est appliqué à des baies de raisin rouge, et **en ce que** la composante de couleur considérée est le rouge ou le noir.

**15.** Procédé selon la revendication 13, **caractérisé en ce que** la composante de couleur élémentaire est située dans l'infrarouge, et **en ce qu'**il comprend en outre une détermination, par spectrophotométrie infrarouge et chimiométrie, d'au moins une concentration caractéristique par baie.

**16.** Procédé selon l'une des revendications précédentes, **caractérisé en ce que** la détermination de caractéristiques comprend un calcul d'un facteur d'hétérogénéité et d'une moyenne d'une caractéristique déterminée pour chaque baie.

**17.** Procédé selon l'une quelconque des revendications précédentes, **caractérisé en ce qu'**il comprend en outre un

éclairage des baies selon des conditions d'éclairement prédéterminées.

**18.** Procédé selon l'une quelconque des revendications précédentes, **caractérisé en ce qu'**il comprend en outre un étalonnage géométrique de l'image des baies.

**19.** Procédé selon l'une quelconque des revendications précédentes, **caractérisé en ce qu'**il comprend en outre une correction des couleurs de l'image des baies.

**20.** Procédé selon l'une quelconque des revendications précédentes, **caractérisé en ce que** l'identification de contours des baies comprend :

- une transformation de l'image des baies en une image seuillée, sur laquelle on distingue des blocs de baies,
- une suppression d'impuretés de l'image seuillée, et
- une segmentation des blocs de baies en baies aux contours définis.

**21.** Procédé selon la revendication 20, **caractérisé en ce que** la transformation en image seuillée comprend un seuillage de l'image des baies selon un seuil de valeur d'une composante de couleur élémentaire.

**22.** Procédé selon l'une quelconque des revendications 20 à 21, **caractérisé en ce que** la suppression d'impuretés comprend une succession d'érosions et de dilatations des blocs de baies.

**23.** Procédé selon l'une quelconque des revendications 20 à 22, **caractérisé en ce que** la suppression d'impuretés comprend un algorithme de bouchage de trous par propagation.

**24.** Procédé selon l'une quelconque des revendications 20 à 23, **caractérisé en ce que** la segmentation des blocs de baies comprend:

- une transformation de l'image seuillée en une image de niveaux de gris,
- un seuillage par logique floue de l'image de niveaux de gris,
- une utilisation d'un opérateur d'érosion jusqu'à obtenir un centre de gravité par baie, et
- une expansion autour des centres de gravité, jusqu'à obtention des contours des baies.

**25.** Dispositif (1) d'analyse de baies (20) mettant en oeuvre un procédé selon l'une quelconque des revendications précédentes, comprenant :

- un plateau (2) d'analyse,
- des moyens (5) pour acquérir une image de baies disposées sur le plateau d'analyse, ladite image étant composée de pixels d'au moins une composante de couleur élémentaire, et
- des moyens (6) pour déterminer des caractéristiques géométriques et/ou colorimétriques des baies

**caractérisé en ce qu'**il comprend en outre des moyens pour réaliser un suivi temporel d'au moins une des caractéristiques déterminées sur des baies (20) d'un même type.

**26.** Dispositif selon la revendication 25, **caractérisé en ce qu'**il comprend en outre un accès à une base de données pour sauvegarder des caractéristiques déterminées.

**27.** Dispositif selon la revendication 25 ou 26, **caractérisé en ce qu'**il comprend en outre des moyens pour visualiser une évolution temporelle d'au moins une des caractéristiques déterminées.

**28.** Dispositif selon l'une quelconque des revendications 25 à 27, **caractérisé en ce qu'**il comprend en outre des moyens pour accéder à une base de données comprenant au moins un résultat d'une autre analyse de baies obtenu à l'aide d'un dispositif quelconque.

**29.** Dispositif selon l'une quelconque des revendications 25 à 28, **caractérisé en ce qu'**il comprend en outre des moyens pour visualiser au moins une des caractéristiques déterminées.

**30.** Dispositif selon l'une des revendications 25 à 29, **caractérisé en ce qu'**il comprend en outre des moyens pour éclairer des baies disposées sur le plateau d'analyse.

**31.** Dispositif selon la revendication 30, **caractérisé en ce qu'**il comprend en outre une surface de verre dépolie située entre les moyens pour éclairer et le plateau d'analyse, et située en amont des moyens pour acquérir une image de baies.

**32.** Dispositif selon l'une des revendications 25 à 31, **caractérisé en ce que** le plateau d'analyse comprend des renfoncements espacés.

**33.** Dispositif selon l'une des revendications 25 à 32, **caractérisé en ce que** les moyens pour acquérir une image de baies comprennent une caméra multispectrale réalisant une acquisition d'une image de baies dans un domaine du visible et/ou un domaine de l'infrarouge.

**34.** Dispositif selon l'une des revendications 25 à 33, **caractérisé en ce qu'**il comprend en outre des moyens pour étalonner géométriquement l'image de baies.

**35.** Dispositif selon à la revendication 34, **caractérisé en ce que** les moyens pour étalonner géométriquement l'image de baies comprennent un objet de référence aux dimensions connues.

**36.** Dispositif selon l'une quelconque des revendications 25 à 35, **caractérisé en ce qu'**il comprend en outre des moyens pour corriger les couleurs de l'image de baies.

**37.** Dispositif selon la revendication 36, **caractérisé en ce que** les moyens pour corriger les couleurs de l'image de baies comprennent une mire de couleur.

**38.** Dispositif selon l'une quelconque des revendications 25 à 37, **caractérisé en ce que** les moyens pour déterminer des caractéristiques géométriques et/ou colorimétriques comprennent des moyens de traitement d'image.

## Claims

**1.** Method for analyzing berries (20), comprising:

- arranging berries on an analysis plate (2),
- an acquisition of an image of the arranged berries (20), said image of the berries (20) being composed of pixels of at least one elementary colour component,
- an identification of contours of the berries (20), and
- a determination of geometric and/or colorimetric characteristics of the berries (20),

**characterized in that** it also comprises a reiteration of the method according to the invention on a same type of berry (20), and **in that** it also comprises a monitoring over time of at least one of the geometric and/or colorimetric characteristics determined on the berries (20) of the same type.

**2.** Method according to claim 1, **characterized in that** it also comprises saving at least one of the determined characteristics.

**3.** Method according to claim 1 or 2, **characterized in that** the process according to the invention is implemented on berries originating from a same plot.

**4.** Method according to any one of the preceding claims, **characterized in that** it also comprises a visualisation of a development over time of determined characteristics.

**5.** Method according to any one of the preceding claims, **characterized in that** it also comprises an access to a database comprising at least one result of another analysis of berries obtained using any method.

**6.** Method according to claim 5, **characterized in that** the analysis result consists of a concentration.

**7.** Method according to claim 6, **characterized in that** the determination of characteristics comprises a determination of an average volume of the arranged berries, and **in that** it comprises obtaining a sugar content by matching the determined volume and a concentration of sugars.

**8.** Method according to any one of the preceding claims, **characterized in that** it also comprises a visualisation of determined characteristics.

**9.** Method according to any one of the preceding claims, **characterized in that** it also comprises a determination of the number of berries in the image of berries.

**10.** Method according to any one of the preceding claims, **characterized in that** the determination of characteristics comprises a determination of a volume per berry.

**11.** Method according to any one of the preceding claims, **characterized in that** the determination of characteristics comprises a determination of a surface area per berry.

**12.** Method according to any one of the preceding claims, **characterized in that** the determination of characteristics comprises a determination of a surface area to volume ratio per berry.

**13.** Method according to any one of the preceding claims, **characterized in that** the determination of characteristics comprises, for each berry and at least one of the elementary colour components or a colour component of interest, a calculation of an average, for all the pixels of the image of berries inside the contour of a berry, of the values of the considered colour component.

**14.** Method according to claim 13, **characterized in that** it is applied to white grape berries, and **in that** the considered colour component is yellow or green, or **in that** it is applied to red grape berries, and **in that** the considered colour component is red or black.

**15.** Method according to claim 13, **characterized in that** the elementary colour component is situated in the infrared, and **in that** it also comprises a determination, by infrared spectrophotometry and chemometry, of at least one characteristic concentration per berry.

**16.** Method according to one of the preceding claims, **characterized in that** the determination of characteristics comprises a calculation of a heterogeneity factor and an average of a determined characteristic for each berry.

**17.** Method according to any one of the preceding claims, **characterized in that** it also comprises a lighting of the berries according to predetermined lighting conditions.

**18.** Method according to any one of the preceding claims, **characterized in that** it also comprises a geometric calibration of the image of the berries.

**19.** Method according to any one of the preceding claims, **characterized in that** it also comprises a correction of the colours of the image of the berries.

**20.** Method according to any one of the preceding claims, **characterized in that** the identification of contours of the berries comprises:

- a conversion of the image of the berries to a thresholded image, in which it is possible to distinguish blocks of berries,
- a deletion of impurities from the thresholded image, and
- a segmentation of the blocks of berries to berries with defined contours.

**21.** Method according to claim 20, **characterized in that** the conversion to a thresholded image comprises a thresholding of the image of the berries according to a threshold for a value of an elementary colour component.

**22.** Method according to any one of claims 20 to 21, **characterized in that** the deletion of impurities comprises a succession of erosions and dilations of the blocks of berries.

**23.** Method according to any one of claims 20 to 22, **characterized in that** the deletion of impurities comprises an algorithm for filling holes by propagation.

**24.** Method according to any one of claims 20 to 23, **characterized in that** the segmentation of the blocks of berries

comprises:

- a conversion of the thresholded image to a grey-scale image,
- a thresholding of the grey-scale image by fuzzy logic,
- a use of an erosion operator until a centre of gravity for each berry is obtained, and
- an expansion around the centres of gravity, until the contours of the berries are obtained.

**25.** Device (1) for analyzing berries (20) implementing a method according to any one of the preceding claims, comprising:

- an analysis plate (2),
- means (5) for acquiring an image of berries arranged on the analysis plate, said image being composed of pixels of at least one elementary colour component, and
- means (6) for determining geometric and/or colorimetric characteristics of the berries,

**characterized in that** it also comprises means for carrying out a monitoring over time of at least one of the determined characteristics on berries (20) of the same type.

**26.** Device according to claim 25, **characterized in that** it also comprises an access to a database for saving determined characteristics.

**27.** Device according to claim 25 or 26, **characterized in that** it also comprises means for visualizing a development over time of at least one of the determined characteristics.

**28.** Device according to any one of claims 25 to 27, **characterized in that** it also comprises means for accessing a database comprising at least one result of another analysis of berries obtained using any device.

**29.** Device according to any one of claims 25 to 28, **characterized in that** it also comprises means for visualizing at least one of the determined characteristics.

**30.** Device according to one of claims 25 to 29, **characterized in that** it also comprises means for lighting berries arranged on the analysis plate.

**31.** Device according to claim 30, **characterized in that** it also comprises a ground glass surface situated between the lighting means and the analysis plate, and situated upstream of the means for acquiring an image of berries.

**32.** Device according to one of claims 25 to 31, **characterized in that** the analysis plate comprises spaced recesses.

**33.** Device according to one of claims 25 to 32, **characterized in that** the means for acquiring an image of berries comprise a multispectral camera carrying out an acquisition of an image of berries in a visible range and/or an infrared range.

**34.** Device according to one of claims 25 to 33, **characterized in that** it also comprises means for geometrically calibrating the image of the berries.

**35.** Device according to claim 34, **characterized in that** the means for geometrically calibrating the image of berries include a reference object of known dimensions.

**36.** Device according to any one of claims 25 to 35, **characterized in that** it also comprises means for correcting the colours of the image of berries.

**37.** Device according to claim 36, **characterized in that** the means for correcting the colours of the image of berries include a colour test pattern.

**38.** Device according to any one of claims 25 to 37, **characterized in that** the means for determining geometric and/or colorimetric characteristics include image-processing means.

**Patentansprüche**

1. Vorrichtung zur Analyse von Beeren (20), mit:

   - einer Anordnung von Beeren auf einer Analysenplatte (2),
   - einer Gewinnung eines Bildes der angeordneten Beeren (20), wobei das Bild der Beeren (20) aus Pixeln von wenigstens einer primärfarbigen Komponente besteht,
   - einer Kantenerkennung der Beeren (20), und
   - einer Bestimmung von geometrischen und/oder kolorimetrischen Eigenschaften der Beeren (20),

   **dadurch gekennzeichnet, dass** sie außerdem eine Wiederholung des erfindungsgemäßen Verfahrens für eine gleiche Art von Beeren (20) umfasst, und dass sie außerdem eine zeitliche Überwachung wenigstens einer der bei der gleichen Art von Beeren (20) bestimmten geometrischen und/oder kolorimetrischen Eigenschaften umfasst.

2. Verfahren nach Anspruch 1, **dadurch gekennzeichnet, dass** es außerdem eine Sicherung wenigstens einer der bestimmten Eigenschaften umfasst.

3. Verfahren nach Anspruch 1 oder 2, **dadurch gekennzeichnet, dass** das erfindungsgemäße Verfahren an Beeren aus einer und derselben Parzelle ausgeführt wird.

4. Verfahren nach einem der vorhergehenden Ansprüche, **dadurch gekennzeichnet, dass** es außerdem eine Darstellung einer zeitlichen Entwicklung von bestimmten Eigenschaften umfasst.

5. Verfahren nach einem der vorhergehenden Ansprüche, **dadurch gekennzeichnet, dass** es außerdem einen Zugang zu einer Datenbank mit wenigstens einem durch irgendein Verfahren erzielten Ergebnis aus einer anderen Beerenanalyse umfasst.

6. Verfahren nach Anspruch 5, **dadurch gekennzeichnet, dass** das Analysenergebnis in einer Konzentration besteht.

7. Verfahren nach Anspruch 6, **dadurch gekennzeichnet, dass** die Bestimmung von Eigenschaften eine Bestimmung eines Durchschnittsvolumens der angeordneten Beeren umfasst, und dass es die Erzielung einer Zuckerbelastung durch Verbindung des bestimmten Volumens und einer Konzentration aus Zuckern umfasst.

8. Verfahren nach einem der vorhergehenden Ansprüche, **dadurch gekennzeichnet, dass** es außerdem eine Darstellung von bestimmten Eigenschaften umfasst.

9. Verfahren nach einem der vorhergehenden Ansprüche, **dadurch gekennzeichnet, dass** es außerdem eine Bestimmung der Anzahl der Beeren auf dem Beerenbild umfasst.

10. Verfahren nach einem der vorhergehenden Ansprüche, **dadurch gekennzeichnet, dass** die Bestimmung von Eigenschaften eine Bestimmung eines Volumens pro Beere umfasst.

11. Verfahren nach einem der vorhergehenden Ansprüche, **dadurch gekennzeichnet, dass** die Bestimmung von Eigenschaften eine Bestimmung einer Fläche pro Beere umfasst.

12. Verfahren nach einem der vorhergehenden Ansprüche, **dadurch gekennzeichnet, dass** die Bestimmung von Eigenschaften eine Bestimmung eines Fläche-Volumen-Ratios pro Beere umfasst.

13. Verfahren nach einem der vorhergehenden Ansprüche, **dadurch gekennzeichnet, dass** die Bestimmung von Eigenschaften, für jede Beere und wenigstens eine der primärfarbigen Komponenten oder eine interessierende Farbkomponente, eine Ermittlung eines Mittelwerts, auf alle Pixeln des Bildes der Beeren innerhalb der Beerenkanten, für die Werte der betroffenen Farbkomponente umfasst.

14. Verfahren nach Anspruch 13, **dadurch gekennzeichnet, dass** es an weißen Weintraubenbeeren angewendet wird, und dass die betroffene Farbkomponente Gelb oder Grün ist, oder dadurch, dass es an roten Weintraubenbeeren angewendet wird, und dass die betroffene Farbkomponente Rot oder Schwarz ist.

15. Verfahren nach Anspruch 13, **dadurch gekennzeichnet, dass** sich die primärfarbige Komponente im Infrarotbereich befindet, und dadurch, dass es außerdem eine Bestimmung wenigstens einer Eigenschaftskonzentration pro Beere durch Infrarotspektrophotometrie und Chemometrik umfasst.

**16.** Verfahren nach einem der vorhergehenden Ansprüche, **dadurch gekennzeichnet, dass** die Bestimmung von Eigenschaften eine Berechnung eines Heterogenitätsfaktors und eines Mittelwerts einer bestimmten Eigenschaft für jede Beere umfasst.

**17.** Verfahren nach einem der vorhergehenden Ansprüche, **dadurch gekennzeichnet, dass** es außerdem eine Belichtung der Beeren gemäß vorbestimmten Belichtungsbedingungen umfasst.

**18.** Verfahren nach einem der vorhergehenden Ansprüche, **dadurch gekennzeichnet, dass** es außerdem eine geometrische Kalibrierung des Bildes der Beeren umfasst.

**19.** Verfahren nach einem der vorhergehenden Ansprüche, **dadurch gekennzeichnet, dass** es außerdem eine Farbkorrektur für das Bild der Beeren umfasst.

**20.** Verfahren nach einem der vorhergehenden Ansprüche, **dadurch gekennzeichnet, dass** die Kantenerkennung für die Beeren:

- eine Umwandlung des Bildes der Beeren in ein per Schwellenwert erzeugtes Bild, auf dem Beerenblöcke zu erkennen sind,
- eine Unterdrückung der Störungen des per Schwellenwert erzeugten Bildes, und
- eine Segmentierung der Beerenblöcke in Beeren mit bestimmten Kanten

umfasst.

**21.** Verfahren nach Anspruch 20, **dadurch gekennzeichnet, dass** die Konvertierung in ein per Schwellenwert umwandeltes Bild eine Umwandlung des Bildes der Beeren mit einem Schwellenwert einer primärfarbigen Komponente umfasst.

**22.** Verfahren nach einem der Ansprüche 20-21, **dadurch gekennzeichnet, dass** die Unterdrückung von Bildstörungen eine Abfolge von Erosionen und Dilatationen der Beerenblöcke umfasst.

**23.** Verfahren nach einem der Ansprüche 20-22, **dadurch gekennzeichnet, dass** die Unterdrückung von Bildstörungen einen Loch-Füll-Algorithmus per Propagieren umfasst.

**24.** Verfahren nach einem der Ansprüche 20-23, **dadurch gekennzeichnet, dass** die Segmentierung der Beerenblöcke:

- eine Umwandlung des per Schwellenwert erzeugten Bildes in ein Graustufenbild,
- eine Spreizung per Fuzzy-Logik des Graustufenbildes,
- eine Verwendung eines Erosionsoperators bis zum Erhalt eines Schwerpunktes pro Beere, und
- eine Ausdehnung um die Schwerpunkte herum bis zum Erhalt der Beerenkanten

umfasst.

**25.** Vorrichtung (1) zur Analyse von Beeren (20), wobei ein Verfahren nach einem der vorhergehenden Ansprüche angewendet wird, mit:

- einer Analysenplatte (2),
- Mitteln (5) zur Erzeugung eines Bildes von auf der Analysenplatte angeordneten Beeren, wobei das Bild aus Pixeln von wenigstens einer primärfarbigen Komponente besteht, und
- Mitteln (6) zur Bestimmung der geometrischen und/oder kolorimetrischen Eigenschaften der Beeren,

**dadurch gekennzeichnet, dass** sie außerdem Mittel zur Erzielung einer zeitlichen Überwachung wenigstens einer der auf Beeren (20) einer gleichen Art bestimmten Eigenschaften umfasst.

**26.** Vorrichtung nach Anspruch 25, **dadurch gekennzeichnet, dass** sie außerdem einen Zugang zu einer Datenbank zur Sicherung von bestimmten Eigenschaften umfasst.

**27.** Vorrichtung nach Anspruch 25 oder 26, **dadurch gekennzeichnet, dass** sie außerdem Mittel zur Darstellung einer zeitlichen Entwicklung wenigstens einer der bestimmten Eigenschaften umfasst.

**28.** Vorrichtung nach einem der Ansprüche 25-27, **dadurch gekennzeichnet, dass** sie außerdem Mittel umfasst, um Zugang zu einer Datenbank mit wenigstens einem mittels irgendeiner Vorrichtung erzielten Ergebnis einer weiteren Beerenanalyse zu haben.

**29.** Vorrichtung nach einem der Ansprüche 25-28, **dadurch gekennzeichnet, dass** sie außerdem Mittel zur Darstellung wenigstens einer der bestimmten Eigenschaften umfasst.

**30.** Vorrichtung nach einem der Ansprüche 25-29, **dadurch gekennzeichnet, dass** sie außerdem Mittel für die Belichtung von auf der Analysenplatte angeordneten Beeren umfasst.

**31.** Vorrichtung nach Anspruch 30, **dadurch gekennzeichnet, dass** sie außerdem eine zwischen den Belichtungsmitteln und der Analysenplatte angeordnete Mattglasscheibe umfasst, wobei Letztere vor den Mitteln zur Gewinnung eines Beerenbildes gelagert ist.

**32.** Vorrichtung nach einem der Ansprüche 25-31, **dadurch gekennzeichnet, dass** die Analysenplatte in Abstand zueinander gelagerte Vertiefungen umfasst.

**33.** Vorrichtung nach einem der Ansprüche 25-32, **dadurch gekennzeichnet, dass** die Mittel zur Gewinnung eines Beerenbildes eine multispektrale, eine Gewinnung eines Beerenbildes in einem sichtbaren und/oder Infrarot-Bereich ausführende Kamera umfassen.

**34.** Vorrichtung nach einem der Ansprüche 25-33, **dadurch gekennzeichnet, dass** sie außerdem Mittel zur geometrischen Kalibrierung des Bildes der Beeren umfasst.

**35.** Vorrichtung nach Anspruch 34, **dadurch gekennzeichnet, dass** die Mittel zur geometrischen Kalibrierung des Beerenbildes ein Referenzobjekt mit bekannten Abmessungen umfassen.

**36.** Vorrichtung nach einem der Ansprüche 25-35, **dadurch gekennzeichnet, dass** sie außerdem Mittel zur Korrektur der Farben des Beerenbildes umfasst.

**37.** Vorrichtung nach Anspruch 36, **dadurch gekennzeichnet, dass** die Mittel zur Farbkorrektur des Beerenbildes ein Farbbalkenmuster umfassen.

**38.** Vorrichtung nach einem der Ansprüche 25-37, **dadurch gekennzeichnet, dass** die Mittel zur Bestimmung der geometrischen und/oder kolorimetrischen Eigenschaften Bildbearbeitungsmittel umfassen.

FIG.1A

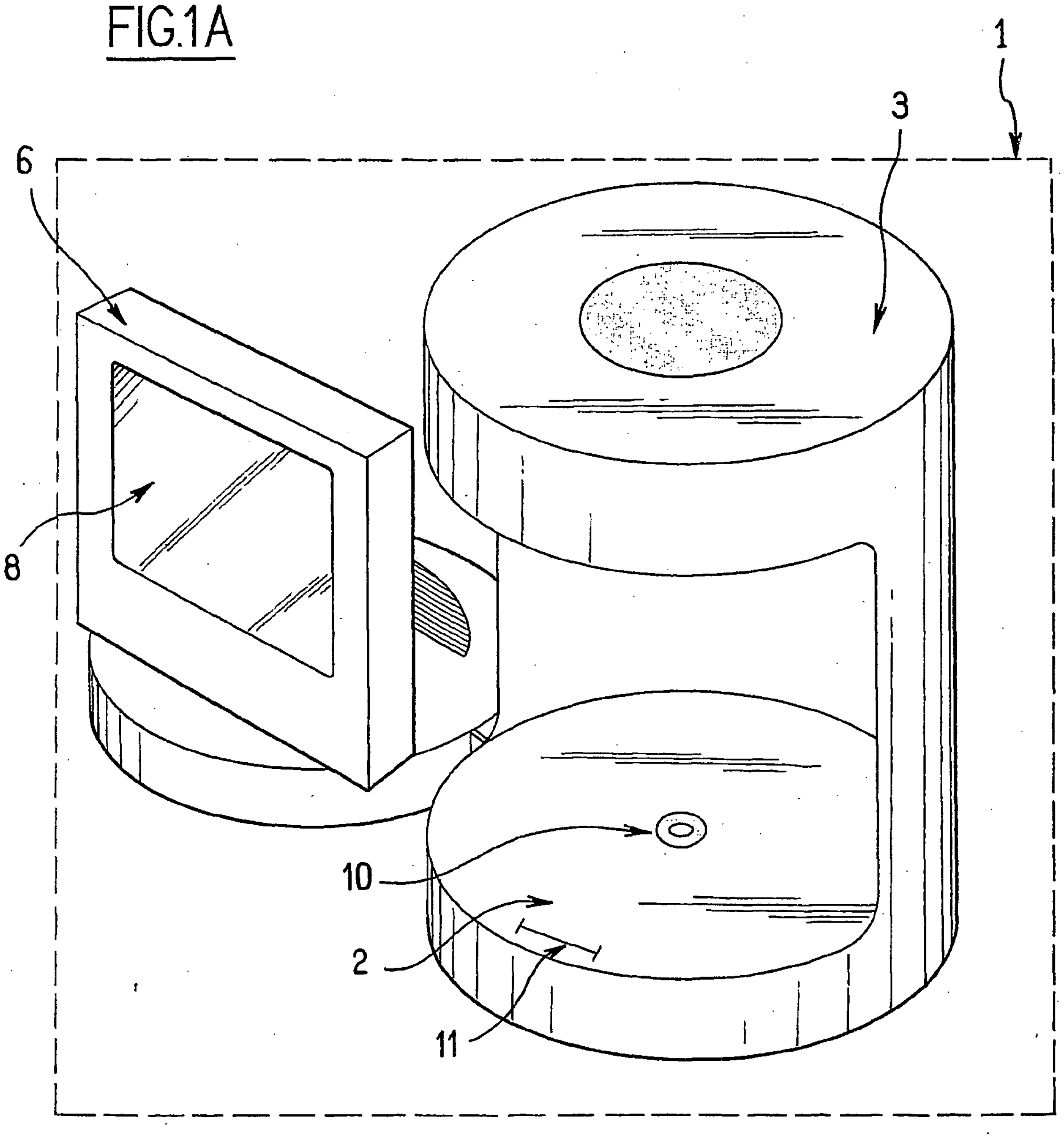

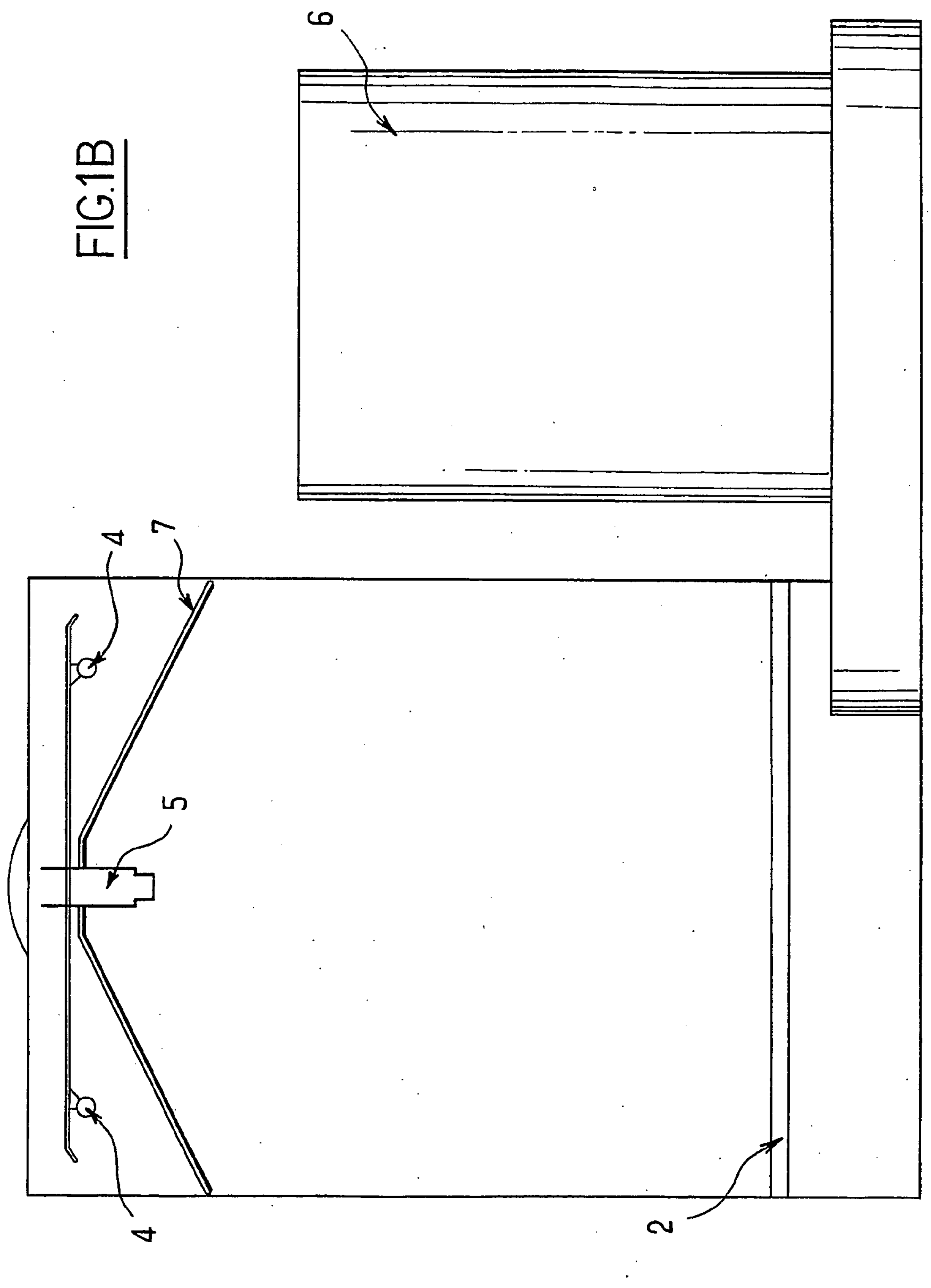


FIG.1B

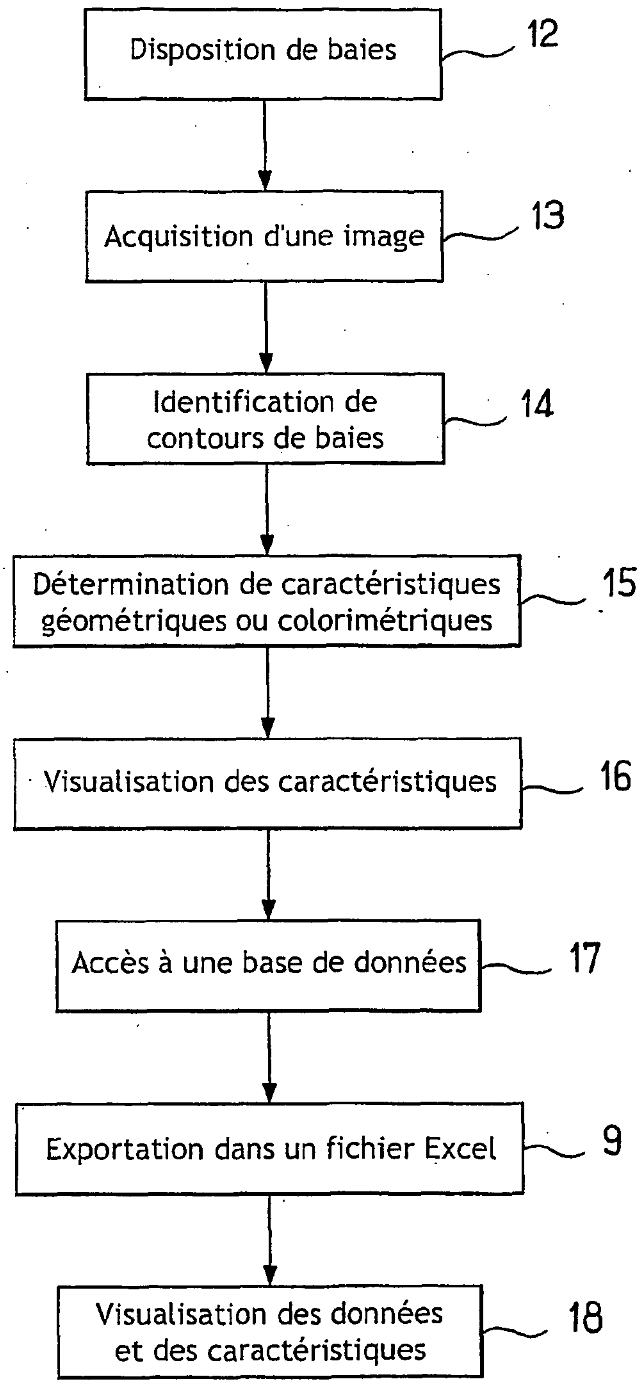
Disposition de baies
12
Acquisition d'une image
13
Identification de contours de baies
14
Détermination de caractéristiques géométriques ou colorimétriques
15
Visualisation des caractéristiques
16
Accès à une base de données
17
Exportation dans un fichier Excel
9
Visualisation des données et des caractéristiques
18

FIG.2

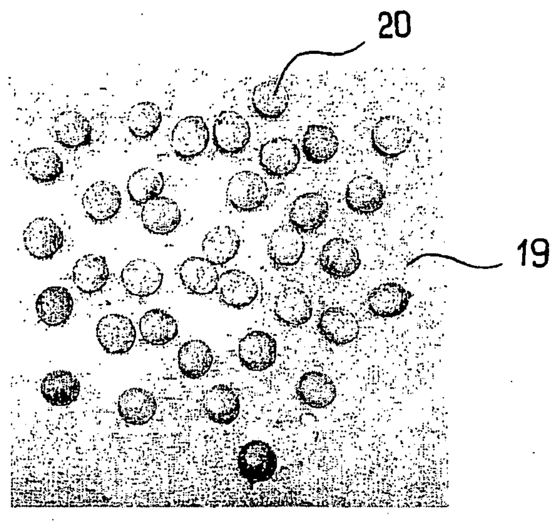


FIG.3A

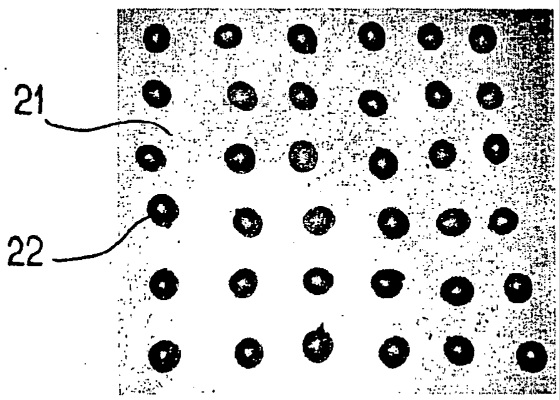


FIG.3B

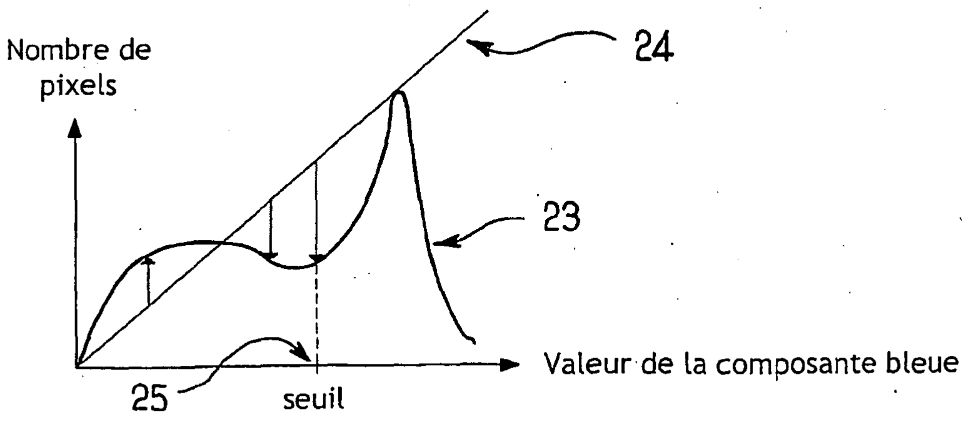


FIG.4A

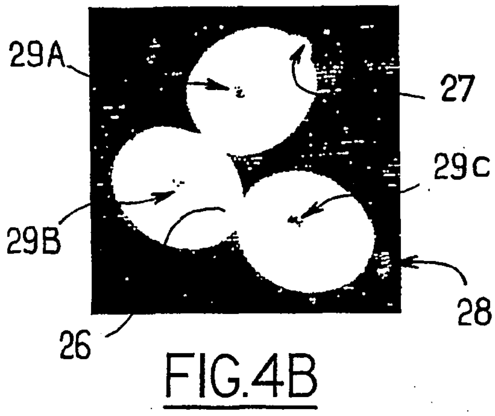


FIG.4B

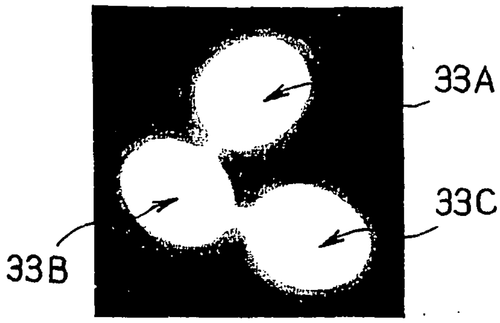


FIG.4E

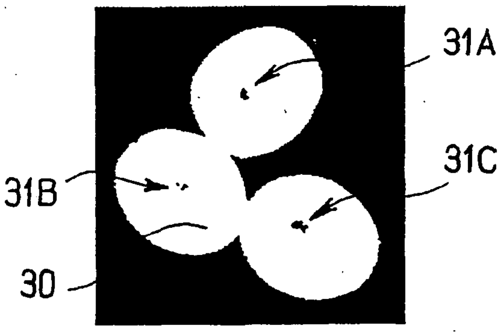


FIG.4C

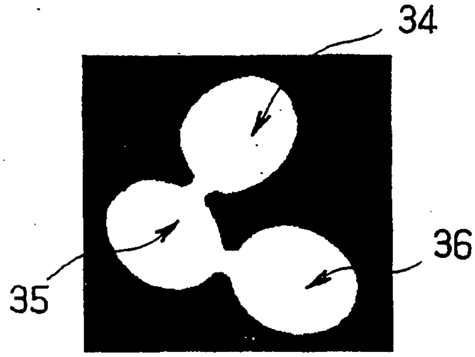


FIG.4F

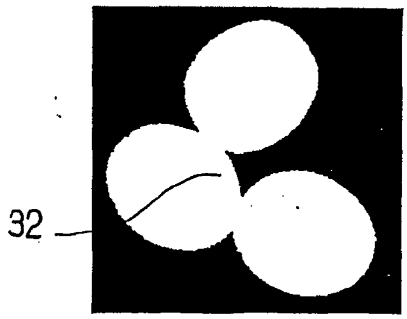


FIG.4D

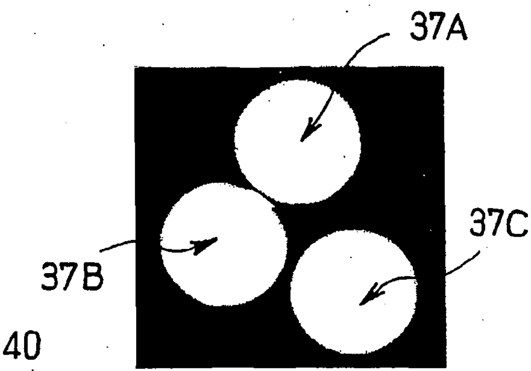


FIG.4G

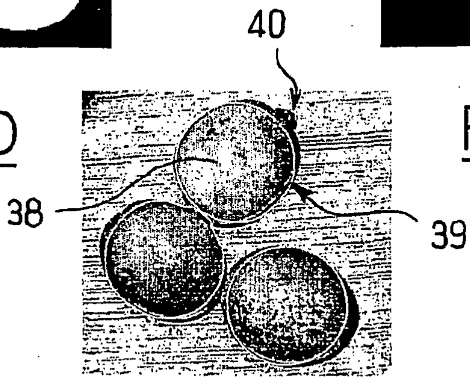


FIG.4H

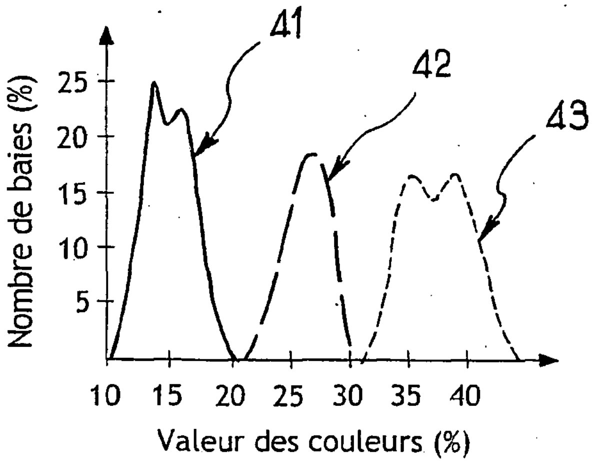
41
42
43
Nombre de baies (%)
25
20
15
10
5
10 15 20 25 30 35 40
Valeur des couleurs (%)

FIG.5

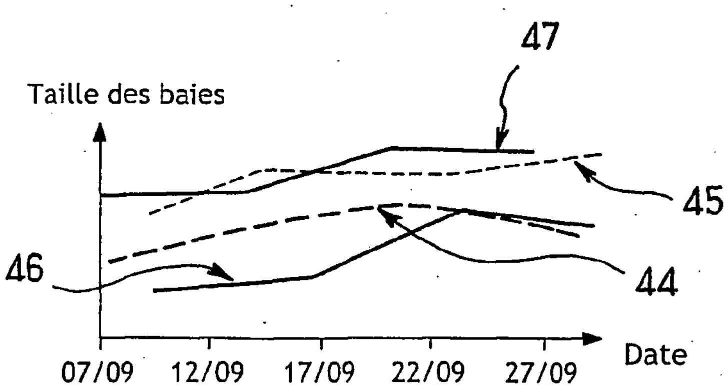
47
Taille des baies
45
46
44
07/09 12/09 17/09 22/09 27/09
Date

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0685814 A